# DEMANDE DE BREVET EUROPEEN

(11) **EP 4 787 065 A1**
(43) Date de publication de la demande: **05.08.2026**
(21) Numéro de dépôt: 26155078.4
(22) Date de dépôt: 29.01.2026
(51) Int. Cl.: G02F 1/01, G02F 1/21, G02F 1/225

(54) **SYSTÈME OPTIQUE DE MODIFICATION DE LA POLARISATION DE LA LUMIÈRE**

(30) Priorité: 31.01.2025 FR 2501001
(71) Demandeur: Marbeuf Conseil et Recherche, 75009 Paris (FR)
(72) Inventeur: SANGLE-FERRIERE, Bruno, 75016 paris (FR)
(74) Mandataire: Ipsilon

(57) **Abrégé**

Système optique pour modifier sélectivement les composantes de polarisation d'un signal lumineux incident (Wi), comportant :
∘ un répartiteur de signal recevant en entrée le signal lumineux incident (Wi) et générant en sortie deux signaux secondaires (W1, W2),
∘ un déphaseur commandable (7) pour introduire un déphasage prédéfini entre les deux signaux,
∘ un interféromètre (8) recevant en entrée les signaux ainsi déphasés et générant en sortie des signaux (W'1, W'2) ayant interféré, secondaires, avec une répartition de la puissance entre les signaux secondaires qui est fonction du déphasage,
∘ au moins un rotateur de polarisation (10) sur le trajet d'au moins un des signaux provenant de l'interféromètre, pour introduire un écart correspondant entre les directions de polarisation des signaux secondaires,
un combineur de signal (5) pour générer, à partir des signaux (W"1, W"2) provenant de l'interféromètre et ayant traversé ledit au moins un rotateur de polarisation, un signal combiné

## Description

### Domaine technique

La présente invention concerne le domaine des systèmes optiques de modification de la polarisation de la lumière, pouvant notamment être appliqués à des systèmes de communication optique.

### Technique antérieure

La demande EP4407896A1 décrit un système de communication optique comportant un modificateur de polarisation placé sur le chemin de propagation de la lumière générée par un émetteur, configuré pour modifier la direction de la polarisation de la lumière et introduire un déphasage entre deux composantes perpendiculaires du champ électrique de la lumière. Plusieurs solutions pour modifier la polarisation y sont présentées, notamment une solution qui présente l'inconvénient de combiner un modificateur de l'ellipticité de la polarisation et un modificateur de la direction de la polarisation, rendant le montage complexe. Une autre solution proposée consiste à utiliser autant de rotateurs de polarisation qu'il y a de choix possibles de valeurs de rotation, chaque rotateur faisant tourner la polarisation électrique de l'onde incidente d'un angle fixe. Il en résulte non seulement un cout élevé de réalisation du dispositif mais l'impossibilité pour l'utilisateur d'ajuster précisément l'angle de rotation, par exemple pour adapter cet angle de rotation à diverses configurations d'un système.

La rotation d'une polarisation linéaire d'une onde électromagnétique peut aussi être effectuée par un rotateur de Faraday, dans lequel un champ magnétique de même direction que la direction de propagation de l'onde est appliqué sur le chemin de propagation de l'onde. Ce principe, pour être rendu commandable électriquement, nécessite l'installation d'un solénoïde entourant le chemin de propagation, ce qui est d'une part difficile à réaliser sur un guide d'onde plat mais aussi nécessite de l'énergie lors de son utilisation, et ne peut être utilisé à des fréquences élevées du fait de la constante de temps induite par l'inductance du solénoïde.

### Exposé de l'invention

Il demeure par conséquent un besoin pour perfectionner encore les systèmes optiques pour modifier la polarisation d'un signal et remédier à tout ou partie des inconvénients de l'art antérieur exposés ci-dessus.

### Résumé de l'invention

L'invention répond à ce besoin grâce à un système optique pour modifier sélectivement les composantes de polarisation d'un signal lumineux incident, comportant au moins :
o un répartiteur de signal recevant en entrée le signal lumineux incident et générant en sortie deux signaux secondaires,
o un déphaseur commandable pour introduire un déphasage prédéfini entre les deux signaux,
o un interféromètre recevant en entrée les signaux ainsi déphasés et générant en sortie des signaux ayant interféré, secondaires, avec une répartition de la puissance entre les signaux secondaires qui est fonction dudit déphasage,
o au moins un rotateur de polarisation sur le trajet d'au moins l'un des signaux provenant de l'interféromètre, pour introduire un écart correspondant entre les directions de polarisation des signaux secondaires,
o un combineur de signal pour générer, à partir des signaux provenant de l'interféromètre et ayant traversé ledit au moins un rotateur de polarisation, un signal combiné.

Grâce à l'invention, les composantes de polarisation du signal combiné dépendent de la répartition de puissance des signaux secondaires, donc du déphasage introduit par le déphaseur commandable.

L'invention permet de produire facilement un signal combiné ayant des composantes de polarisation souhaitées, qui peut ainsi prendre un très grand nombre de valeurs, si cela est souhaité, et peut être facilement ajusté par l'utilisateur.

De plus, l'invention permet d'utiliser facilement des fibres ou autres guides d'ondes, notamment planaires, ce qui facilite la réalisation d'un système fiable et d'encombrement réduit.

Dans des exemples de mise en œuvre de l'invention, le signal lumineux incident est polarisé linéairement.

De préférence, le rotateur de polarisation est configuré pour introduire une rotation de 90° de la polarisation. Alternativement le rotateur de polarisation transforme une onde Trans électrique en onde trans magnétique, ou inversement si les ondes sont portées par un guide d'onde planaire.

Le répartiteur de signal peut comporter un coupleur optique. En variante, le répartiteur de signal comporte une lame semi-réfléchissante.

Le déphaseur commandable peut être piloté électriquement. En variante, le déphaseur commandable est piloté optiquement.

Le déphaseur commandable peut comporter un élément électro-optique tel qu'une cellule de Pockels.

Le combineur de signaux peut comporter un miroir semi-réfléchissant. En variante, le combineur de signaux comporte un cristal biréfringent.

Les propagations des signaux peuvent s'effectuer dans des fibres optiques. Alternativement, les propagations des signaux depuis l'entrée du dispositif jusqu'au rotateur de polarisation peuvent s'effectuer au sein d'au moins un guide d'onde planaire.

L'invention a encore pour objet l'utilisation du système selon l'invention pour générer un ensemble de valeurs discrètes de polarisation en vue de coder une information sur un signal lumineux, notamment pour générer un ensemble de valeurs discrètes de polarisation en vue de coder une information sur un photon.

L'information peut notamment comporter une pluralité de bits encodés sur un seul envoi de lumière.

Dans ce cas, le déphaseur commandable est par exemple commandé pour prendre une succession de valeurs prédéfinies.

L'invention a encore pour objet l'utilisation d'un système optique permettant de modifier sélectivement les composantes de polarisation d'un signal lumineux incident, comportant au moins :
o un étage d'entrée recevant en entrée le signal lumineux incident et générant en sortie deux signaux secondaires avec une répartition de la puissance entre les signaux secondaires qui est fonction d'un signal de commande,
o au moins un rotateur de polarisation sur le trajet d'au moins un des signaux provenant de l'étage d'entrée, pour introduire un écart correspondant entre les directions de polarisation des signaux secondaires,
o un combineur de signal pour générer, à partir des signaux provenant de l'étage d'entrée et ayant traversé ledit au moins un rotateur de polarisation, un signal combiné,
l'étage d'entrée étant commandé afin de générer un ensemble de valeurs discrètes de polarisation en vue de coder une information sur un signal lumineux.

Cet aspect de l'invention peut se combiner avec tout ou partie des caractéristiques suivantes :
- l'information comporte une pluralité de bits encodés sur un seul envoi de lumière,
- le signal lumineux incident est polarisé linéairement.
- le rotateur de polarisation introduisant une rotation de 90°de la polarisation,
- l'étage d'entrée comporte :
   un répartiteur de signal recevant en entrée le signal lumineux incident et générant en sortie deux signaux, un déphaseur commandable permettant d'introduire un déphasage prédéfini entre les deux signaux en fonction du signal de commande,
   un interféromètre recevant en entrée les signaux ainsi déphasés et générant en sortie des signaux ayant interféré, secondaires, avec une répartition de la puissance entre les signaux secondaires qui est fonction du déphasage.
- L'étage d'entrée comporte :
   un répartiteur de signal recevant en entrée le signal lumineux incident et générant en sortie deux signaux,
   un coupleur optique recevant les signaux du répartiteur et comportant entre deux guides d'onde séparés par un matériau d'indice de réfraction commandable, permettant de faire varier la répartition de la puissance entre les signaux en sortie en fonction du signal de commande,
- le répartiteur de signal comporte un coupleur optique.
- le répartiteur de signal comporte une lame semi-réfléchissante.
- le déphaseur commandable est piloté électriquement.
- le déphaseur commandable est piloté optiquement.
- le déphaseur commandable comporte une cellule de Pockels.
- le combineur de signaux comporte un miroir semi-réfléchissant
- le combineur de signaux comporte un cristal biréfringent.
- les propagations des signaux s'effectuent dans des fibres optiques
- les propagations des signaux depuis l'entrée du système optique jusqu'au rotateur de polarisation s'effectuent au sein d'au moins un guide d'onde planaire.
- le système est utilisé pour générer un ensemble de valeurs discrètes de polarisation en vue de coder une information sur un photon.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig. 1] la figure 1 représente de manière schématique un système optique de modification de la polarisation d'une onde lumineuse selon un exemple de mise en œuvre de l'invention,
[Fig 2] la figure 2 représente une variante de combineur,
[Fig 3] la figure 3 illustre une variante d'interféromètre,
[Fig 4] la figure 4 représente de manière schématique une variante du premier sous-ensemble, et
[Fig 5] la figure 5 représente de manière schématique une autre variante du premier sous-ensemble.

### Description détaillée

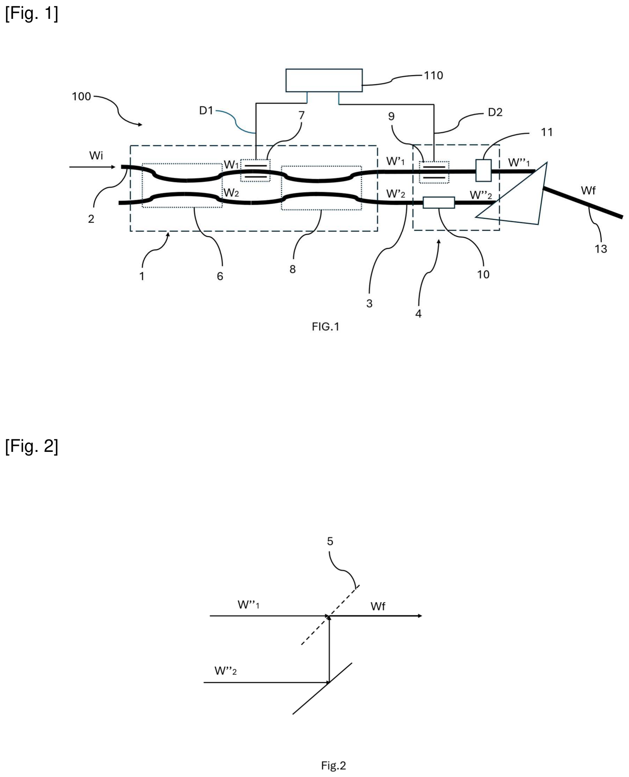

On a représenté à la figure 1 un exemple de système optique 90 selon l'invention, appliqué à la modification de la polarisation d'une onde lumineuse incidente Wi, qui est de préférence polarisée linéairement selon un axe donné.

Le système 100 est configuré pour générer à partir du signal incident Wi un signal optique de sortie Wf, ayant des composantes de polarisation dont les valeurs sont déterminées par une unité de commande 110, par exemple un micro-ordinateur équipé d'une interface adaptée de pilotage d'éléments électro-optiques.

L'onde incidente Wi se propage dans un premier canal de propagation optique 2, de préférence une fibre optique ou un guide optique plan.

Le système100 peut comporter, comme illustré :
- un premier sous-ensemble optique 1 configuré pour fournir, à partir de l'onde lumineuse incidente Wi cohérente se propageant dans le premier canal de propagation optique 2, une première onde lumineuse secondaire W'1 cohérente se propageant dans le premier canal de propagation optique 2 et une deuxième onde lumineuse secondaire W'2 cohérente se propageant dans un deuxième canal de propagation optique 3. La répartition en pourcentage de l'intensité des première et deuxième ondes lumineuses secondaires W'1, W'2 est ajustable de manière contrôlée sous l'effet d'un signal de commande D1 provenant de l'unité de commande 110. Les ondes cohérentes incidentes et secondaires sont par exemple polarisées linéairement et toutes deux de direction verticale..
- en aval du premier sous-ensemble optique 1, un deuxième sous-ensemble optique 4 configuré pour modifier les première et deuxième ondes lumineuses secondaires W'1, W'2 polarisées linéairement en premières et deuxième ondes lumineuses W"1 et W"2 dont les première et deuxième directions de polarisation font entre elles un angle fixe non nul, valant de préférence +/-90 degrés, ces ondes étant en outre déphasées l'une de l'autre d'un déphasage donné, de préférence nul mais pouvant être contrôlé par un signal D2 de l'unité de commande 110.
- un combineur d'ondes lumineuses 5 situé en aval du second sous-ensemble optique 4, configuré pour mélanger les première et deuxième ondes lumineuses modulées W"1, W"2 sur un même canal optique final 13, pour générer l'onde Wf.

Les signaux D1 et D2 peuvent être électriques et/ou optiques.

Le système 100 selon l'invention permet, en recevant en entrée une onde lumineuse incidente Wi polarisée linéairement, de fournir en sortie une onde lumineuse finale Wf dont les composantes de polarisation sont pilotables de manière contrôlée et continument par l'unité de commande 110.

Plus particulièrement, l'onde lumineuse finale Wf est la somme des première et deuxième ondes lumineuses modulées W"1, W"2 sortant du second sous-ensemble optique 4 qui sont polarisées linéairement, de préférence à 90 degrés l'une de l'autre, dont les amplitudes et le déphasage sont contrôlables par l'unité de commande 110.

Cette solution présente l'avantage de pouvoir être utilisée à de grandes fréquences. L'invention présente également l'avantage d'être applicable aussi bien sur des chemins optiques en champ libre, que dans des milieux guidés, tels que des fibres optiques ou des guides d'ondes planaires, ou une combinaison de ces moyens.

### Premier sous-ensemble optique

Le premier sous-ensemble optique 1 (encore appelé étage d'entrée) permet de séparer l'onde lumineuse incidente Wi polarisée linéairement en deux dans avec une répartition prédéfinie des intensités, qui sont de préférence égales, pour générer les ondes W1 et W2.

Le premier sous-ensemble 1 permet de déphaser l'une par rapport à l'autre les ondes W1 et W2, avec un déphasage pilotable par le signal D1 de l'unité de commande 110.

Le premier sous-ensemble 1 permet également de faire interférer ces ondes ainsi déphasées pour les faire ressortir sous la forme des deux ondes W'1 et W'2 sur deux canaux optiques, avec des intensités respectives dépendant dudit déphasage.

De préférence, le premier sous-ensemble 1 comprend au moins un premier répartiteur 6 configuré pour diviser l'onde lumineuse incidente Wi en la première onde lumineuse W1 et la deuxième onde lumineuse W2.

Ce répartiteur 6 est par exemple un coupleur optique comprenant deux chemins optiques rapprochés l'un de l'autre sur une longueur donnée, mais restant tout de même écartés l'un de l'autre de telle sorte que l'onde incidente entrant dans l'un de ces deux chemins optiques ressorte sensiblement à égale intensité par la sortie de chacun de ces deux chemins optiques.

Alternativement le diviseur d'onde comporte une lame semi réfléchissante traversée par la moitié de l'onde incidente Wi tandis que l'autre moitié en est réfléchie à 45 degrés.

De préférence, le premier sous-ensemble 1 comprend au moins un premier déphaseur 7 pilotable par le signal D1, associée au premier canal de propagation optique 2, pour induire un premier déphasage de la première onde lumineuse W1 par rapport à la deuxième onde lumineuse W2 de manière contrôlée. Le déphaseur 7 est de préférence composé d'au moins une cellule de Pockels. La cellule de Pockels peut être longitudinale ou transverse. Son axe optique est de préférence aligné avec la direction de la lumière cohérente. Si la lumière cohérente n'est pas polarisée linéairement selon un axe fixe et que la cellule de Pockels utilisée est transverse alors le déphaseur est de préférence composé de deux cellules de Pockels successives orientées à 90° l'une de l'autre de telle sorte que le déphasage induit sur la lumière soit le même selon deux composantes perpendiculaires de son champ électrique.

De préférence, le premier sous-ensemble 1 comprend au moins un interféromètre optique 8 configuré pour induire une répartition des intensités des première et deuxième ondes lumineuses W1, W2, dépendante du déphasage introduit par le déphaseur 7.

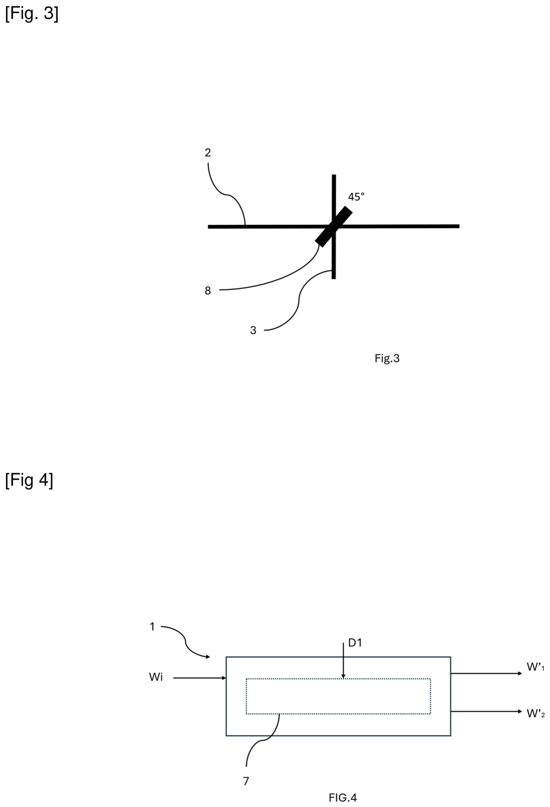

Cet interféromètre 8 est de préférence un coupleur optique, constitué de deux chemins optiques rapprochés l'un de l'autre sur une longueur donnée, mais restant tout de même écartés l'un de l'autre sur une autre longueur donnée de telle sorte que les ondes incidentes entant dans ces deux chemins optiques ressortent des deux chemins optiques avec des intensités respectives dépendant du déphasage des ondes entrant dans ledit interféromètre. Alternativement l'interféromètre 8 comporte une lame semi réfléchissante traversée par les deux ondes incidentes se propageant sur les chemins 2 et 3, chacune à 45 degrés de ladite lame semi réfléchissante et à 90 degrés l'une de l'autre, comme illustré sur la figure 3.

Un dispositif (non représenté) peut être inséré en aval d'au moins une des sorties du sous-ensemble 1 pour s'assurer que les deux ondes qui en sortent sont en phase. Ce dispositif est par exemple constitué d'un chemin optique additionnel inséré au bout de l'une des deux sorties dudit sous-ensemble1.

Le premier sous-ensemble 1 peut être similaire à un interféromètre de Mach Zehnder servant à mesurer le déphasage introduit par le déphaseur 7.

Ainsi, dans une variante, illustrée très schématiquement à la figure 4, le sous-ensemble 1 comporte un interféromètre de Mach Zehnder, de préférence du type à fibre optique, comportant un matériau électro-optique permet de faire varier l'indice de réfraction en fonction du signal de commande appliqué, et ainsi le déphasage. On peut encore utiliser un modulateur acousto-optique pour modifier l'indice de réfraction, des déphaseurs à jonctions pn qui sont faites à bases de semi-conducteurs dopés p et n) ou des déphaseurs reposant sur la température pour faire varier l'indice de réfraction.

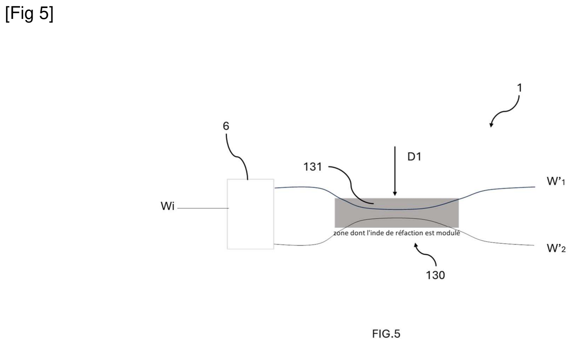

Dans une autre variante, illustrée très schématiquement à la figure 5, le sous-ensemble 1 comporte un répartiteur 6 en entrée, par exemple à répartition 50/50 entre les sorties, puis un coupleur optique 130 ayant deux guides d'onde séparés par un matériau 131 dont l'indice de réfraction est commandable par le signal D1, par exemple un matériau électrooptique. Le matériau 131 permet de faire varier la répartition de la puissance de sortie sur les signaux W'1 et W'2 en fonction du signal de commande D1.

### Deuxième sous-ensemble optique

Le deuxième sous-ensemble optique 4 permet d'une part de transformer la direction des ondes initialement polarisées linéairement W'1 et W'2 selon une même direction en deux ondes polarisées linéairement dans deux directions de polarisation, de préférence perpendiculaires, et avantageusement, d'introduire un déphasage entre les deux ondes W1', W2', ce déphasage étant commandable par le signal D2.

De préférence, le deuxième sous-ensemble optique 4 comprend, comme illustré, au moins un deuxième déphaseur 9 pilotable par le signal D2, associée au premier canal de propagation optique 2, configurée pour induire de manière contrôlée un deuxième déphasage de la première onde lumineuse W'1 par rapport à la deuxième onde lumineuse W'2.

Le déphaseur 9 est de préférence composé d'au moins une cellule de Pockels. La cellule de Pockels peut être longitudinale ou transverse. Son axe optique est de préférence aligné avec la direction de la lumière cohérente. Si la lumière cohérente n'est pas polarisée linéairement selon un axe fixe et que la cellule de Pockels utilisée est transverse, alors le déphaseur 9 est de préférence composé de deux cellules de Pockels successives orientées à 90° l'une de l'autre de telle sorte que le déphasage induit sur la lumière soit le même selon deux composantes perpendiculaires de son champ électrique.

De préférence, le deuxième sous-ensemble optique 4 comprend au moins un rotateur de polarisation 10 associé au deuxième canal de propagation 3 configuré pour faire tourner la deuxième direction de polarisation de la deuxième onde lumineuse W'2 d'un angle prédéfini. Ce rotateur comprend par exemple un solénoïde autour d'un cristal d'Arséniure de Gallium (AsGa) dans lequel se propage l'onde lumineuse, créant un champ magnétique parallèle au chemin de propagation de l'onde électromagnétique, ou peut encore comporter une lame demi-onde orientée à 45° du champ électrique de l'onde lumineuse si celle-ci est polarisée linéairement, ou un circuit transformant au sein d'un guide d'onde planaire une onde trans électrique en trans magnétique ou inversement.

Avantageusement, cette configuration permet de transformer la direction des ondes initialement polarisées linéairement selon une même direction en ondes polarisées linéairement dans deux directions, de préférence perpendiculaires entre elles dans le cas où le rotateur induit une rotation de 90 degrés.

La première cellule de Pockels 7 et/ou la deuxième cellule de Pockels 9 comprennent de préférence un cristal non linéaire tel que l'oxyde baryum bêta (BBO) ou le tellure de cadmium (CdTe).

Un élément 11 peut être placé sur le trajet de l'un des signaux du deuxième sous-ensemble optique pour introduire un déphasage permettant d'ajuster le chemin optique.

### Combineur de signaux

De préférence, le combineur d'ondes lumineuses 5 comprend au moins un cristal biréfringent 11.

De préférence, ce cristal biréfringent 11 est recouvert d'au moins un traitement de surface anti-reflet. Par exemple, le cristal biréfringent 11 est un prisme qui comprend une ou plusieurs couches anti-reflet en entrée et/ou en sortie.

En variante, comme illustré à la figure 2, le combineur 5 est une lame semi-réfléchissante.

### Canaux de propagation

De préférence, le premier canal de propagation 2 et le deuxième canal de propagation 3 comprennent chacun un guide d'ondes planaire. Alternativement ils comprennent par exemple une fibre optique.

De préférence, les coupleurs 6 et 8 sont constitués de guides d'ondes, planaires ou fibres optiques permettant un rapprochement du premier canal de propagation 2 et du deuxième 3.

Les dimensions des rapprochements, telles que l'écart et/ou la longueur du rapprochement, dépendent des indices de réfraction des guides d'onde et/ou des fibres, de l'indice de réfraction du milieu qui les sépare et du profil des guides d'onde et/ou des fibres.

Si le premier canal de propagation 2 et le deuxième canal de propagation 3 sont des guides d'ondes alors ceux-ci peuvent être rapprochés l'un de l'autre sur une courte distance.

Toute source permettant de générer l'onde lumineuse incidente Wi cohérente peut être utilisée en entrée du système, cette lumière incidente étant sous la forme de toute lumière ou photon d'une longueur d'onde donnée. La lumière générée peut être polarisée linéairement. La source peut être un laser.

Les guides d'onde et/ou les fibres optiques sont de préférence sélectionnées pour conserver la polarisation.

Les guides d'onde peuvent être plats.

### Transmission d'information

Le système optique selon l'invention peut être utilisé pour transmettre une information qui est codée sur un ensemble de valeurs discrètes de polarisation du signal lumineux.

Des exemples de transmission d'information sont divulgués dans la demande WO2024/156821 du même inventeur, avec par exemple un récepteur permettant de mesure l'ellipticité et la polarisation de la lumière.

Bien entendu, l'invention n'est pas limitée aux exemples de réalisation décrits. On peut apporter diverses modifications sans sortir du cadre de l'invention. Par exemple, les cellules de Pockels peuvent être remplacées par des cellules de Kerr.

Le premier répartiteur d'onde lumineuse 6 peut comprendre une lame séparatrice ou semi réfléchissante divisant l'onde incidente en deux ondes d'intensité égales.

## Revendications

1. Utilisation d'un système optique permettant de modifier sélectivement les composantes de polarisation d'un signal lumineux incident (Wi), comportant au moins :
o un étage d'entrée (1) recevant en entrée le signal lumineux incident (Wi) et générant en sortie deux signaux secondaires avec une répartition de la puissance entre les signaux secondaires qui est fonction d'un signal de commande (D1),
o au moins un rotateur de polarisation (10) sur le trajet d'au moins l'un des signaux provenant de l'étage d'entrée, pour introduire un écart correspondant entre les directions de polarisation des signaux secondaires,
o un combineur de signal (5) pour générer, à partir des signaux (W"1, W"2) provenant de l'étage d'entrée (1) et ayant traversé ledit au moins un rotateur de polarisation (10), un signal combiné,
l'étage d'entrée (1) étant commandé afin de générer un ensemble de valeurs discrètes de polarisation en vue de coder une information sur un signal lumineux.

2. Utilisation selon la revendication 1, l'information comportant une pluralité de bits encodés sur un seul envoi de lumière.

3. Utilisation selon l'une des revendications 1 et 2, le signal lumineux incident (Wi) étant polarisé linéairement.

4. Utilisation selon l'une quelconque des revendications précédentes, le rotateur de polarisation (10) introduisant une rotation de 90° de la polarisation.

5. Utilisation selon l'une quelconque des revendications précédentes, l'étage d'entrée (1) comportant :
un répartiteur de signal (6) recevant en entrée le signal lumineux incident (Wi) et générant en sortie deux signaux (W1, W2), un déphaseur commandable (7) permettant d'introduire un déphasage prédéfini entre les deux signaux (W1, W2) en fonction du signal de commande,
un interféromètre (8) recevant en entrée les signaux ainsi déphasés et générant en sortie des signaux (W'1, W'2) ayant interféré, secondaires, avec une répartition de la puissance entre les signaux secondaires qui est fonction du déphasage.

6. Utilisation selon la revendication 5, le répartiteur de signal comportant un coupleur optique (6).

7. Utilisation la revendication 5, le répartiteur de signal comportant une lame semi-réfléchissante.

8. Utilisation selon l'une quelconque des revendications 1 à 4, l'étage d'entrée (1) comportant :
un répartiteur de signal (6) recevant en entrée le signal lumineux incident et générant en sortie deux signaux (W1, W2),
un coupleur optique (130) recevant les signaux (W1, W2) du répartiteur et comportant deux guides d'onde séparés par un matériau (131) d'indice de réfraction commandable, permettant de faire varier la répartition de la puissance entre les signaux de sortie (W'1, W'2) en fonction du signal de commande.

9. Utilisation selon l'une quelconque des revendications 5 à 7, le déphaseur commandable (7) étant piloté électriquement.

10. Utilisation selon l'une quelconque des revendications 5 à 7, le déphaseur commandable étant piloté optiquement.

11. Utilisation selon l'une des revendications 5 à 7, le déphaseur commandable (7) comportant une cellule de Pockels.

12. Utilisation selon l'une quelconque des revendications précédentes, le combineur de signaux comportant un miroir semi-réfléchissant

13. Utilisation selon l'une quelconque des revendications 1 à 12, le combineur de signaux comportant un cristal biréfringent.

14. Utilisation selon l'une quelconque des revendications précédentes, les propagations des signaux s'effectuant dans des fibres optiques

15. Utilisation selon l'une quelconque des revendications précédentes, les propagations des signaux depuis l'entrée du système optique jusqu'au rotateur de polarisation s'effectuant au sein d'au moins un guide d'onde planaire.

16. Utilisation du système selon l'une quelconque des revendications précédentes, pour générer un ensemble de valeurs discrètes de polarisation en vue de coder une information sur un photon.
